# EUROPEAN PATENT APPLICATION

(11) **EP 4 007 045 A1**
(43) Date of publication of application: **01.06.2022**
(21) Application number: 21731882.3
(22) Date of filing: 25.03.2021
(51) Int. Cl.: H01M 50/119, H01M 50/122, H01M 10/0525

(54) **SOFT PACKAGE BATTERY AND MANUFACTURING METHOD THEREFOR**

(30) Priority: 18.10.2020 CN 202011114179; 18.10.2020 CN 202011114188; 03.12.2020 CN 202011404848
(71) Applicant: Juheyuan Science & Technology Co., Ltd., Shenzhen, Quangdong 518116 (CN)
(72) Inventor: CHENG, Kewen, Shenzhen, Guangdong 518031 (CN)
(74) Representative: Appleyard Lees IP LLP
(86) International application number: PCT/CN2021/082987
(87) International publication number: WO 2022/077867

(57) **Abstract**

A pouch battery and a manufacturing method thereof are disclosed. The pouch battery includes: a battery core; a first encapsulating part configured to partially cover the battery core; an electrolyte contained in the first encapsulating part and soaking the battery core; and a second encapsulating part configured to be integrally spliced with the first encapsulating part to encapsulate the battery core; wherein the first encapsulating part is a metal component, and the second encapsulating part is a composite film component.

## Description

### CROSS REFERENCE TO RELATED APPLICATIONS

This application claims priority to Chinese Patent Applications No. 202011114188.4, filed on October 18, 2020, entitled "new type of square battery", No. 202011404848.2, filed on December 3, 2020, entitled "new type of cylindrical battery", and No. 202011114179.5, filed on October 18, 2020, entitled "new type of round button battery", the contents of which are incorporated herein in entirety by reference.

### TECHNICAL FIELD

The present disclosure relates to a pouch battery and manufacturing method thereof.

### BACKGROUND

In batteries with different shapes and structures, pouch batteries have been paid extensive attention due to their many advantages. The pouch batteries are lithium-ion batteries with a polymer case, usually encapsulated by a composite film. The pouch battery has good safety performance, and the entire structure thereof is packed with the composite film. In the case of potential safety hazards, the pouch battery will only swell and crack at most, rather than explode. The pouch battery is light in weight. The weight of the pouch battery is 40% lighter than that of a battery having a stainless-steel case lithium in the case of having the same capacity, and is 20% lighter than that of a battery having an aluminum case. The pouch battery has high energy density. The energy density of the pouch battery is generally 10% to 15% higher than that of the battery having the stainless-steel case in the case of having the same size, and is 5% to 10% higher than that of the battery having the aluminum case. The pouch battery has lower internal resistance. The internal resistance of the pouch battery is lower than that of the lithium battery, which greatly reduces the battery's power self-consumption, and the cycle life of the battery is longer. In addition, since the battery is pouched, it can also be designed more flexibly.

Currently, the pouch batteries commonly used in the industry are encapsulated generally by firstly stamping a case with upper and lower aluminum laminated films, then heat-sealing it with a copper mold, and then sealing it.

### SUMMARY

According to various embodiments, a first aspect of the present application provides a pouch battery, which includes:
a battery core;
a first encapsulating part configured to partially cover the battery core;
an electrolyte contained in the first encapsulating part and soaking the battery core; and
a second encapsulating part configured to be integrally spliced with the first encapsulating part to encapsulate the battery core.

The first encapsulating part is a metal component, and the second encapsulating part is a composite film component.

According to various embodiments, a second aspect of the present application provides a manufacturing method of a pouch battery. The pouch battery includes a battery core, a first encapsulating part, an electrolyte, and a second encapsulating part. The method includes:
providing the first encapsulating part according to a shape of the battery core;
injecting the electrolyte into the first encapsulating part to soak the battery core;
press-fitting the second encapsulating part to the first encapsulating part; and
integrally splicing the first encapsulating part with the second encapsulating part.

The details of one or more embodiments of the present application are set forth in the following drawings and description. Other features and advantages of the present application will become apparent from the description, drawings, and claims.

### BRIEF DESCRIPTION OF THE DRAWINGS

To illustrate the technical solutions according to the embodiments of the present application or prior art more clearly, the accompanying drawings for describing the embodiments or the prior art are introduced briefly in the following. Apparently, the accompanying drawings in the following description are only some embodiments of the present application, and persons of ordinary skill in the art can derive other drawings from the accompanying drawings without creative efforts.
FIG. 1 is an exploded view of a pouch battery according to one embodiment of the present application.
FIG. 2 is a flowchart of a manufacturing method of a pouch battery according to one embodiment of the present application.
FIG. 3 is a flowchart of a manufacturing method of a pouch battery according to another embodiment.
FIG. 4 is a flowchart of a manufacturing method of a pouch battery according to yet another embodiment.
FIG. 5 is a flowchart of a manufacturing method of a pouch battery according to yet another embodiment.

### DETAILED DESCRIPTION OF THE EMBODIMENTS

The current packaging technology mainly has the following problems:
1. When an aluminum laminated film is forced to be physically stamped and formed, an arc-shaped edge sealing thereof will be physically impacted, causing an aluminum layer in a middle of the aluminum laminated film to be damaged. Due to the damage, the electrolyte will continue to corrode the aluminum layer during the charging and discharging and storage of the battery, causing the battery to generate gas after storage and causing fatal defects such as liquid leakage;
2. As a pouch battery, a core component, wound core, inside the battery is protected by only the aluminum laminated film of about 113um. As a result, when the battery is impacted by external forces, the weak aluminum laminated film cannot fully protect the wound core, which will cause positive and negative electrodes inside the wound core to be short-circuited due to external compression, resulting in fatal damage; and
3. For the conventionally designed pouch battery, taking a cube-shaped battery as an example, its top seal occupies a space of 3.5mm to 4.5mm, and its side seal occupies a space of 1.5mm. The space utilization is reduced by 15% to 40% (which is specifically due to a model size of the battery, the smaller the model, the greater the proportion of space loss).

In order to make the technical solutions of the present application clearer, the present application is further illustrated in detail below with reference to the accompanying drawings and embodiments. It should be understood that the specific embodiments described herein are only used to explain the present application, and are not used to limit the present application.

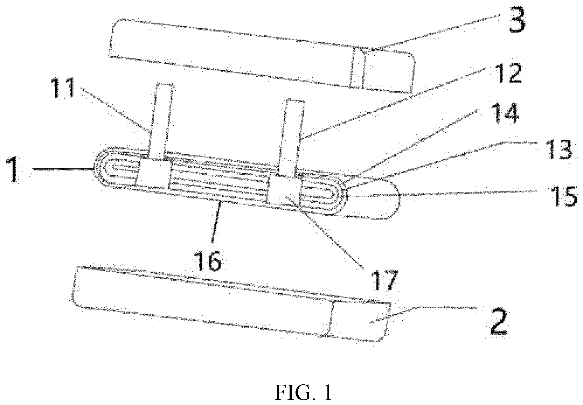

FIG. 1 is an exploded view of a pouch battery according to one embodiment of the present application. The pouch battery includes:
a battery core 1 including a positive tab 11, a negative tab 12, a separator paper 13, a positive plate14, a negative plate 15 and a wound core 16. Both the positive tab 11 and the negative tab 12 are connected to the wound core 16 through a tab glue 17. The separator paper 13 is disposed inside the wound core 16.
a first encapsulating part 2 used to partially cover the battery core 1. The battery core 1 is placed in the first encapsulating part 2. The positive tab 11 and the negative tab 12 of the battery core 1 extend out of the first encapsulating part 2.
an electrolyte (not illustrated) contained in the first encapsulating part 2 and soaking the battery core 1; and
a second encapsulating part 3 used to be integrally spliced with the first encapsulating part 2 to encapsulate the battery core 1.

The first encapsulating part 2 is a metal component. The second encapsulating part 3 is a composite film component. By using a sealing head that matches a shape of the first encapsulating part 2, the composite film component as the second encapsulating part 3 is press-fitted onto the first encapsulating part 2, and then the second encapsulating part 3 and the first encapsulating part 3 are integrally spliced by further processing means, thereby realizing the encapsulation of the battery core 1. It can be understood that, as described above, the positive tab 11 and the negative tab 12 extend out of the first encapsulating part 2, and the rest of the battery core 1 is encapsulated.

According to the pouch battery in the above embodiment, since the metal component and the composite film component are integrally spliced for encapsulating, in a first aspect, the forced physical stamping is not required, which prevents damage to the aluminum layer in the middle of the aluminum laminated film, thereby preventing the potential liquid leakage; in a second aspect, the metal component is used to protect the battery core/wound core, thereby preventing the short-circuiting of the positive and negative electrodes due to the external compression; in a third aspect, the top seal and side seal are omitted, which greatly improves the space utilization rate, the smaller the model of the battery, the more obvious the improving effect.

In one embodiment, the metal component is a stainless-steel case, which can prevent rust.

In one embodiment, the composite film component is an aluminum laminated film.

In one embodiment, the aluminum laminated film includes a polypropylene layer. The polypropylene can be melted under high-frequency heating. In particular, the polypropylene has a lower melting point under high-frequency heating compared to other material layers in general composite film component, such that the polypropylene can be melted firstly.

In one embodiment, a shape of the stainless-steel case matches that of the battery core, thereby improving the space utilization rate.

In one embodiment, the stainless-steel case and the battery core are cylindrical, button-shaped, cube-shaped or cuboid, so as to meet the requirements of different storage spaces. As shown in FIG. 1, the shape adopted by this embodiment is a cube.

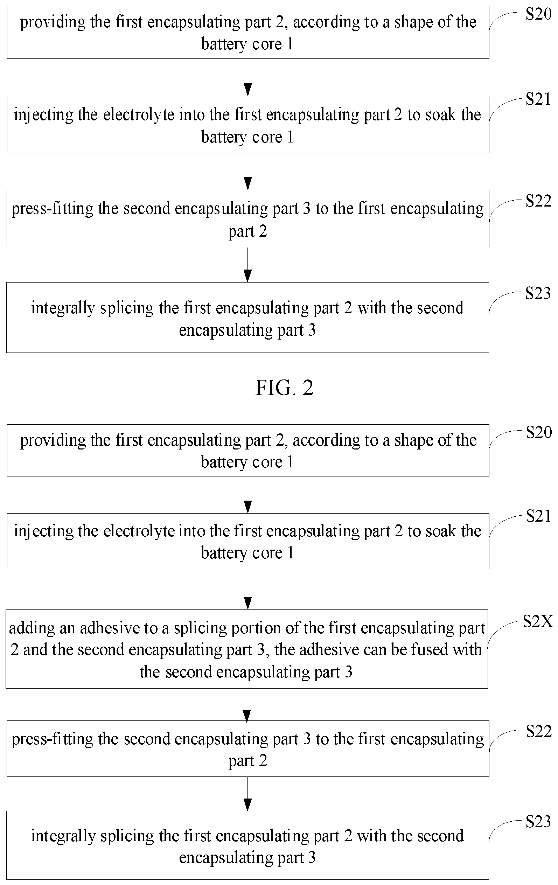

FIG. 2 is a flowchart of a manufacturing method of a pouch battery according to one embodiment of the present application. Referring to FIGS. 1 and 2, the pouch battery includes a battery core 1, a first encapsulating part 2, an electrolyte (not illustrated), and a second encapsulating part 3. The method includes the following steps of S20 to S23.

At S20, the first encapsulating part 2 is provided, according to a shape of the battery core 1.

Specifically, according to the shape of the battery core 1, the material used to manufacture the first encapsulating part 2 is subjected to shaping treatments such as stamping to make it match the shape of the battery core 1, thereby improving the space utilization rate.

At S21, the electrolyte is injected into the first encapsulating part 2 to soak the battery core 1.

Specifically, after the battery core 1 is placed in the first encapsulating part 2, the electrolyte required by the battery can be injected to soak the battery core 1, to ensure that the electrolysis reaction can proceed normally later.

At S22, the second encapsulating part 3 is press-fitted to the first encapsulating part 2.

Specifically, the second encapsulating part 3 is press-fitted to the first encapsulating part 2 through physical force, for preliminary splicing.

At S23, the first encapsulating part 2 is integrally spliced with the second encapsulating part 3.

Specifically, it can be understood that the battery core 1 or the electrolyte cannot be completely sealed or encapsulated by only splicing the first encapsulating part 2 with the second encapsulating part 3 by pressing-fitting, whereas sealing or encapsulating the electrolyte is an important indicator of battery technology. Therefore, it is necessary to take further measures to integrally splice the first encapsulating part 2 with the second encapsulating part 3, so as to prevent the leakage of the electrolyte.

According to the manufacturing method of the pouch battery in the above embodiments, since the metal component and the composite film component are integrally spliced for encapsulating, in a first aspect, the forced physical stamping is not required, which prevents damage to the aluminum layer in the middle of the aluminum laminated film, thereby preventing the potential liquid leakage; in a second aspect, the metal component is used to protect the battery core/wound core, thereby preventing the short-circuiting of the positive and negative electrodes due to the external compression; in a third aspect, the top seal and side seal are omitted, which greatly improves the space utilization rate, the smaller the model of the battery, the more obvious the improving effect.

FIG. 3 is a flowchart of a manufacturing method of a pouch battery according to another embodiment. As shown in FIG. 3, in one embodiment, before the step S22 of press-fitting the second encapsulating part 3 to the first encapsulating part 2, the manufacturing method further includes a step of S2X.

At S2X, an adhesive is added to a splicing portion of the first encapsulating part 2 and the second encapsulating part 3. The adhesive can be fused with the second encapsulating part 3.

Specifically, in order to improve the encapsulating effect of the first encapsulating part 2 and the second encapsulating part 3, it may be considered to add the adhesive to the splicing portion of the first encapsulating part 2 and the second encapsulating part 3. The adhesive can be fused with at least a portion of the second encapsulating part 3, and thus the adhesive can be fused with the second encapsulating part 3.

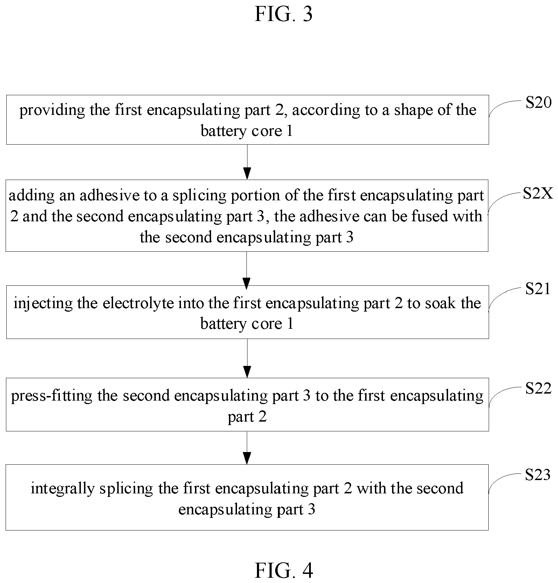

FIG. 4 is a flowchart of a manufacturing method of a pouch battery according to yet another embodiment. As shown in FIG. 4, according to this embodiment, the above step S2X may also be arranged after the step S20 of providing the first encapsulating part 2. From the above two embodiments, it can be understood that, in fact, it is only necessary to add the adhesive before the step S22 of press-fitting the second encapsulating part 3 to the first encapsulating part 2. Specifically, there is no limitation on performing step S2X before or after the step S21 of injecting the electrolyte.

According to one embodiment, the first encapsulating part 2 is a metal component.

According to one embodiment, the second encapsulating part 3 is a composite film component.

According to one embodiment, the step S23 of integrally splicing the first encapsulating part 2 with the second encapsulating part 3 specifically includes:
heating the outside of the second encapsulating part 3 in high-frequency by using a high-frequency encapsulating device, to partially melt the composite film component, thereby fusing the melted composite film component with the adhesive, so that the first encapsulating part 2 is integrally spliced with the second encapsulating part 3. The high frequency is in a range of 30KHZ to 100KHZ

Specifically, the high-frequency encapsulating device is used to heat the outside of the second encapsulating part 3, especially the position of the second encapsulating part 3 where the second encapsulating part 3 is spliced with the first encapsulating part 2. The frequency is generally in a range of 30KHZ to 100KHZ. The heating time is 2 seconds to 10 seconds, which can be adjusted according to specific products, as long as a portion of the composite component can be fused with the same material as the adhesive. In such a way, the first encapsulating part 2 is integrally spliced with the second encapsulating part 3.

In one embodiment, specifically, the step S20 of providing the first encapsulating part 2 is:
stamping the metal component to form the first encapsulating part 2, according to the shape of the battery core 1. It can be understood that the pure metal component undergoes certain stamping to form the required shape, and will generally not be damaged.

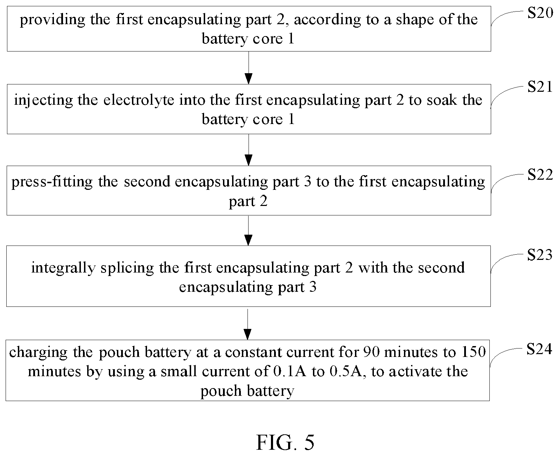

FIG. 5 is a flowchart of a manufacturing method of a pouch battery according to yet another embodiment. In this embodiment, the method further includes a step of S24.

At S24, a small current of 0.1A to 0.5A is used to charge the pouch battery at a constant current for 90 minutes to 150 minutes, to activate the pouch battery.

The battery needs to be activated after being manufactured, and the specific technical content thereof will not be repeated here.

It should be understood that although the various steps in the flowcharts of FIGS. 2 to 5 are illustrated in sequence as indicated by the arrows, these steps are not necessarily performed in sequence in the order indicated by the arrows. Unless expressly specified herein, there is no limitation on the order for performing these steps, and these steps can be performed in other orders. Moreover, at least a portion of the steps in FIGS. 2 to 5 may include multiple sub-steps or multiple stages. These sub-steps or stages are not necessarily performed at the same time, but can be performed at different times. The performing order of these sub-steps or the stages is not necessarily carried out sequentially, but may be performed in turn or alternately with other steps or at least a portion of the sub-steps or stages of other steps.

In one embodiment, the step S22 of coupling the second encapsulating part 3 to the first encapsulating part 2 specifically includes:
press-fitting the second encapsulating part 3 to the first encapsulating part 2 by using a sealing head.

Since the second encapsulating part 3 is a composite material film, it has strong plasticity. By using a sealing head that matches a shape of the first encapsulating part 2, the composite film component as the second encapsulating part 3 is press-fitted onto the first encapsulating part 2, and then the second encapsulating part 3 is integrally spliced with the first encapsulating part 3 by further processing means, thereby realizing the encapsulation of the battery core 1.

In one embodiment, the metal component is a stainless-steel case, which can prevent rust.

In one embodiment, the composite film component is an aluminum laminated film.

In one embodiment, the aluminum laminated film includes a polypropylene layer, and the adhesive also includes polypropylene. The polypropylene can be melted under high-frequency heating. In particular, the polypropylene has a lower melting point under high-frequency heating compared to other material layers in general composite film component, such that the polypropylene can be melted firstly.

Only several implementations of the present disclosure are illustrated in the above-mentioned embodiments, and the description thereof is relatively specific and detailed, but it should not be understood as a limitation on the scope of the present application. It should be noted that for those of ordinary skill in the art, without departing from the concept of the present disclosure, several modifications and improvements can be made, which all fall within the protection scope of the present disclosure. Therefore, the protection scope of the present application shall be subject to the appended claims.

## Claims

1. A pouch battery, comprising:
a battery core;
a first encapsulating part configured to partially cover the battery core;
an electrolyte contained in the first encapsulating part and soaking the battery core; and
a second encapsulating part configured to be integrally spliced with the first encapsulating part to encapsulate the battery core;
wherein the first encapsulating part is a metal component, and the second encapsulating part is a composite film component.

2. The pouch battery according to claim 1, wherein the metal component is a stainless-steel case.

3. The pouch battery according to claim 2, wherein the composite film component is an aluminum laminated film.

4. The pouch battery according to claim 3, wherein the aluminum laminated film comprises a polypropylene layer.

5. The pouch battery according to claim 2, wherein a shape of the stainless-steel case matches a shape of the battery core.

6. The pouch battery according to claim 5, wherein the stainless-steel case and the battery core are cylindrical, button-shaped, cube-shaped or cuboid.

7. A manufacturing method of a pouch battery, the pouch battery comprising a battery core, a first encapsulating part, an electrolyte, and a second encapsulating part, the method comprising:
providing the first encapsulating part according to a shape of the battery core;
injecting the electrolyte into the first encapsulating part to soak the battery core;
press-fitting the second encapsulating part to the first encapsulating part; and
integrally splicing the first encapsulating part with the second encapsulating part.

8. The manufacturing method according to claim 7, further comprising, after press-fitting the second encapsulating part to the first encapsulating part:
adding an adhesive to a splicing portion of the first encapsulating part and the second encapsulating part, and wherein the adhesive is capable of being fused with the second encapsulating part.

9. The manufacturing method according to claim 7, further comprising, after providing the first encapsulating part:
adding an adhesive to a splicing portion of the first encapsulating part and the second encapsulating part, and wherein the adhesive is capable of being fused with the second encapsulating part.

10. The manufacturing method according to claim 8 or 9, wherein the first encapsulating part is a metal component.

11. The manufacturing method according to claim 8 or 9, wherein the second encapsulating part is a composite film component.

12. The manufacturing method according to claim 10, wherein the integrally splicing the first encapsulating part with the second encapsulating part comprises:
heating an outside of the second encapsulating part in high-frequency by using a high-frequency encapsulating device, to partially melt the composite film component, thereby fusing the melted composite film component with the adhesive; and wherein a high frequency is in a range of 30KHZ to 100KHZ

13. The manufacturing method according to claim 10, wherein a heating time for the high-frequency heating is 2 seconds to 10 seconds.

14. The manufacturing method according to claim 10, wherein providing the first encapsulating part comprises:
stamping the metal component to form the first encapsulating part, according to the shape of the battery core.

15. The manufacturing method according to claim 7, wherein the press-fitting the second encapsulating part to the first encapsulating part comprises:
press-fitting the second encapsulating part to the first encapsulating part by using a sealing head.

16. The manufacturing method according to claim 7, further comprising:
charging the pouch battery at a constant current for 90 minutes to 150 minutes by using a small current of 0.1A to 0.5A, to activate the pouch battery.

17. The manufacturing method according to claim 9, wherein the metal component is a stainless-steel case.

18. The manufacturing method according to claim 12, wherein the composite film component is an aluminum laminated film.

19. The manufacturing method according to claim 12, wherein the aluminum laminated film comprises a polypropylene layer, and the adhesive also comprises polypropylene.
